# EUROPÄISCHE PATENTANMELDUNG

(11) **EP 0 938 010 A2**
(43) Veröffentlichungstag der Anmeldung: **25.08.1999**
(21) Anmeldenummer: 98122034.6
(22) Anmeldetag: 20.11.1998
(51) Int. Cl.: G02B 7/182, G02B 23/16

(54) **Vorrichtung zur Positionierung eines Spiegels in einem Teleskop**

(30) Priorität: 20.02.1998 DE 19807119
(71) Anmelder: DORNIER GmbH, 88039 Friedrichshafen (DE)
(72) Erfinder: Hüther, Herbert, 88239 Wangen (DE); Barho, Reiner, 88682 Salem-Neufrach (DE)

(57) **Zusammenfassung**

Die Erfindung betrifft eine Vorrichtung zur Positionierung eines Gegenstands (14), z.B. den Spiegel eines Teleskops, relativ zu einer Struktur (2). Die Vorrichtung umfaßt die folgenden Merkmale:
- eine erste, von einem ersten Antrieb (AN1) angetriebene Exzenterwelle (E1), wobei der erste Antrieb (AN1) relativ zur Struktur (2) starr angeordnet ist,
- eine zweite, von einem zweiten Antrieb (AN2) angetriebene Exzenterwelle (E2), wobei der zweite Antrieb (AN2) relativ zu dem zu positionierenden Gegenstand (14) starr angeordnet ist, wobei
- die erste Exzenterwelle (E1) mit der zweiten Exzenterwelle (E2) drehbar verbunden ist, und die Drehachse (A3) für die Drehbewegung zwischen erster (E1) und zweiter Exzenterwelle (E2) außerhalb der beiden Drehachsen (A1, A2) für den Antrieb der ersten und zweiten Exzenterwelle (E1, E2) liegt,
- eine Verdrehsicherung, die eine Verdrehung zwischen Struktur (2) und dem zu positionierendem Gegenstand (14) verhindert.

## Beschreibung

Die Erfindung betrifft eine Vorrichtung zur Positionierung eines Gegenstands relativ zu einer Struktur. Sie kann insbesondere zur Positionierung eines Spiegels in einem Teleskop eingesetzt werden.

Der Bau immer leistungsfähigerer Teleskope stellt auch an deren mechanischen Aufbau hohe Anforderungen. Die bekannten Positioniervorrichtungen z.B. zur Korrektur von Koma-Abbildungsfehlern, basieren auf dem Einsatz mehrerer, z.B. in Dreieckskonfiguration angeordneter Linearsteller. Ein derartige Positioniervorrichtung wird im NTT-Teleskop (New Technology Telescope) der ESO (European Southern Observatory) in La Silla, Chile seit den 80er Jahren dieses Jahrhunderts eingesetzt. Nachteilig an diesen Vorrichtungen ist, daß zur Ansteuerung der Linearsteller ein komplexer Regelmechanismus notwendig ist. Außerdem wird eine große Zahl von Lagem benötigt, was die Steifigkeit der Struktur wesentlich erniedrigt.

In der **DE 24 49 897 A1** ist eine justierbare Unterlegscheibe beschrieben, mit der die Lage einer in dieser justierbaren Unterlegscheibe befindlichen Öffnung 20 im Hinblick auf einen in einem Fundament fest verankerten Bolzen so verändert werden kann, daß der Bolzen durch die Öffnung hindurchgesteckt werden kann. Die Unterlegscheibe umfaßt ein drehbares äußeres Element, in dem ein inneres Element drehbar gelagert ist, wobei die beiden Drehachsen nicht zusammenfallen. Die Öffnung für die Aufnahme des Bolzens befindet sich im inneren Element, und zwar außerhalb der Drehachse für die Drehung des inneren Elements. Inneres und äußeres Element werden von Hand angetrieben.

Aufgabe der Erfindung ist es, eine Vorrichtung zur Positionierung zu schaffen, mit der durch Ansteuerung eines oder mehrer Antriebe eine definierte Lateralbewegung des zu positionierenden Gegenstands relativ zu einer Struktur erzielt wird. Dabei sollte neben einer hohen Positionsgenauigkeit auch eine hohe Steifigkeit der Vorrichtung erreicht werden.

Diese Aufgabe wird mit dem Gegenstand des Anspruch 1 gelöst. Vorteilhafte Ausführungen der Erfindung sind Gegenstand von weiteren Ansprüchen.

Die erfindungsgemäße Vorrichtung zur Positionierung eines Gegenstands relativ zu einer Struktur umfaßt folgende Merkmale:
- eine erste, von einem ersten Antrieb angetriebene Exzenterwelle, wobei der erste Antrieb relativ zur Struktur starr angeordnet ist,
- eine zweite, von einem zweiten Antrieb angetriebene Exzenterwelle, wobei der zweite Antrieb relativ zu dem zu positionierenden Gegenstand starr angeordnet ist, wobei
- die erste Exzenterwelle mit der zweiten Exzenterwelle drehbar verbunden ist, und die Drehachse für die Drehbewegung zwischen erster und zweiter Exzenterwelle außerhalb der beiden Drehachsen für den Antrieb der ersten und zweiten Exzenterwelle liegt,
- eine Verdrehsicherung, die eine Verdrehung zwischen Struktur und dem zu positionierendem Gegenstand verhindert.

Durch das Verstellen der beiden Exzenterantriebe kann der zu positionierende Gegenstand zu jedem im Verstellbereich liegendem Punkt bewegt werden.

Die erfindungsgemäße Vorrichtung weist insbesondere folgende Vorteile auf:
- sehr hohe Steifigkeit, da nur wenige Lager benötigt werden,
- sehr hohe Positioniergenauigkeit,
- geringe Reibung und deshalb gut regelbar,
- wenige Bauteile und deshalb geringe Herstellkosten,
- eindeutige geometrische Abhängigkeiten.

Die erfindungsgemäße Vorrichtung eignet sich insbesondere für die Positionierung optischer Elemente in optischen Geräten, z.B. Teleskope, Mikroskope. Weitere Anwendungsgebiete sind der Maschinen- und Vorrichtungsbau sowie die Antennenjustage, insbesondere in der Raumfahrt.

Ausführungsbeispiele der Erfindung werden anhand von Zeichnungen näher erläutert. Es zeigen:
- Fig. 1: eine erfindungsgemäße Ausführung für die Positionierung eines Spiegels in einem Teleskop;
- Fig. 2: eine erfindungsgemäße Ausführung bei unterschiedlichen Auslenkungen.

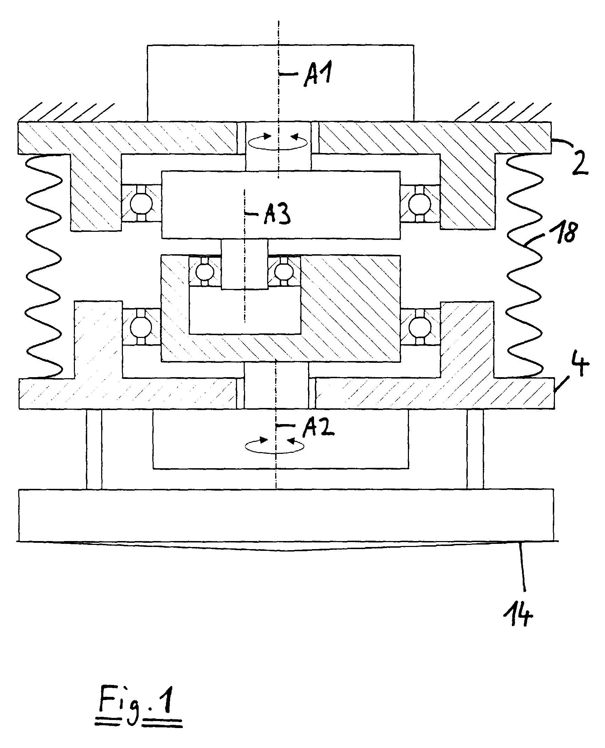

Fig. 1 zeigt eine Ausführung der erfindungsgemäßen Positioniervorrichtung, die hier speziell für die Positionierung eines Spiegels in einem Teleskop ausgelegt ist. Bezugsziffer 2 bezeichnet ein Strukturbauteil des Teleskops, an dem der Antrieb AN1 für die erste Exzenterwelle E1 befestigt ist. Über das erste Lager L1 ist die erste Exzenterwelle E1 um die Antriebsachse A1 drehbar mit der Struktur 2 verbunden. Das Lager L1 kann wie die im folgenden noch zu beschreibenden Lager L2, L3 beispielsweise ein Rollenlager oder ein Kugellager sein. An der ersten Exzenterwelle E1 ist ein Bolzen 10 exzentrisch zur Antriebsachse A1 angeordnet.
Bezugsziffer 4 bezeichnet einen Flansch, an dem der Antrieb AN2 für die zweite Exzenterwelle E2 befestigt ist. Mit diesem Flansch 4 ist der zu positionierende Spiegel 14 über die Arme 16 starr verbunden. Über das Lager L2 ist die zweite Exzenterwelle E2 um die Antriebsachse A2 drehbar mit dem Flansch 4 verbunden.
Erste und zweite Exzenterwelle E1,E2 sind über den Bolzen 10, der in eine Bohrung 8 in der zweiten Exzenterwelle E2 eingreift, um die Achse A3 drehbar miteinander verbunden. Der Außenring des Lagers L3 ist dazu in der Bohrung 8 befestigt, während der Innenring des Lagers E3 auf den Bolzen 10 gepreßt ist. Die Bohrung 8 ist exzentrisch zur Antriebsachse A2 der zweiten Exzenterwelle angeordnet.

Somit ist die Drehachse A3 für die Bewegung der ersten zur zweiten Exzenterwelle E1, E2 in doppelter Hinsicht exzentrisch angeordent. Sie fällt weder mit der Achse A1 für den Antrieb der ersten Exzenterwelle noch mit der Achse A2 für den Antrieb der zweiten Exzenterwelle zusammen.

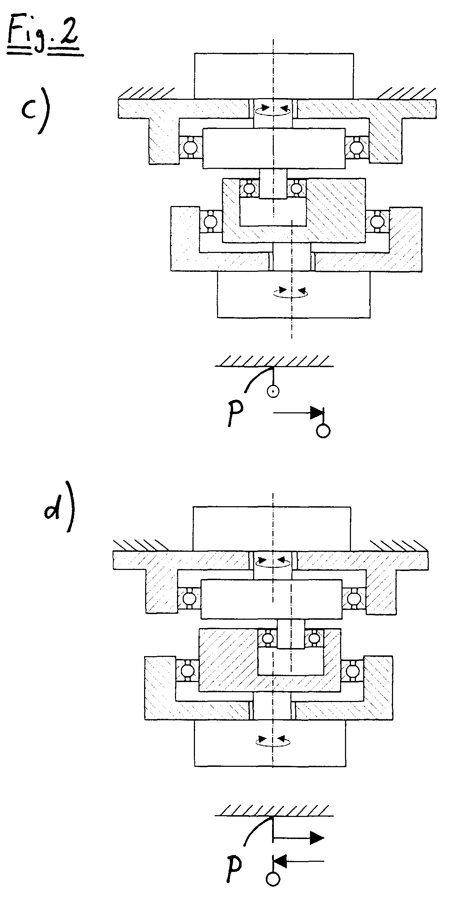

Außerdem ist eine Verdrehsicherung vorhanden, die eine Verdrehung zwischen Struktur 2 und Flansch 4 verhindert. Die Verdrehsicherung ist als Faltenbalg 18 (englisch: bellow) ausgebildet. Der Faltenbalg 18 hat den Vorteil, daß er auch bei lateraler Beanspruchung (wenn Flansch 4 und Struktur 2, anders als in Fig. 1 dargestellt, lateral versetzt sind - siehe auch Fig. 2) eine hohe Steifigkeit der Gesamtstruktur gewährleistet. Der Faltenbalg kann aus einer oder mehreren Schichten aufgebaut sein. Als Materialien werden z.B. Bronze, Stahl oder Edelstahl eingesetzt. Bei Vorrichtungen, die besonders große Auslenkungen ermöglichen sollen, kann alternativ ein lineargeführter Kreuztisch verwendet werden.

Durch Betätigen eines oder beider Antriebe AN1, AN2 kann der Flansch 4 zusammen mit dem Antrieb AN2 und dem Spiegel 14 - innerhalb des Positionierbereichs, der durch die Exzentrizitäten der beiden Exzenterwellen E1, E2 bestimmt wird - in jedem beliebigen Punkt innerhalb der x/y-Ebenen positioniert werden. Dabei steht die x/y-Ebene senkrecht zu den drei Drehachsen A1, A2, A3.
Die beiden Drehachsen A1, A2, die in der dargestellten Ausgangslage vor Betätigen der beiden Antriebe noch ineinanderfallen, werden im allgemeinen beabstandet voneinander zu liegen kommen (siehe z.B. Fig. 2).

Die Vorrichtung kommt mit nur drei vorgespannten Lagern L1, L2, L3 aus, was zu einer sehr hohen Steifigkeit der Gesamtstruktur führt.
Die technischen Daten einer konkreten Ausführung der erfindungsgemäßen Positioniervorrichtung, wie sie zur Koma-Korrektur in einem Teleskop eingesetzt wird, sind:
Positioniergenauigkeit 1 µm.
Bewegte Masse: 500 kg
Maximale Auslenkung: 7 mm.

Fig. 2 zeigt die erfindungsgemäße Ausführung nach Fig. 1 in vier verschiedenen Zuständen abhängig von der Verdrehung der beiden Exzenterwellen E1, E2. Der Spiegel sowie der Faltenbalg sind aus Gründen der Übersichtlichkeit nicht eingezeichnet.
Fig. 2 a zeigt die Ausgangststellung entsprechend Fig. 1. Der Punkt P, bei der die Achse A1 ein gegenüber der Struktur 2 unbewegliches Bezugssystem, z.B. der Boden des Labors, schneidet, ist als Referenz angegeben.
Fig. 2 b zeigt die Stellung, bei der die erste Exzenterwelle E1 um 180° verdreht ist, während die zweite Exzenterwelle E2 gegenüber der Ausgangsstellung nach Fig. 2a nicht verdreht wurde. Hier wird die maximale Auslenkung des Flanschs 4 nach rechts erreicht. Dies ist unterhalb der Fig. 2b mit Hilfe von Pfeilen symbolisch so dargestellt, daß sich die Wirkung der Exzentrizitäten von Exzenterwelle E1 und Exzenterwelle E2 gerade in der gleichen Richtung addieren.
Fig. 2 c zeigt die Stellung, bei der die erste Exzenterwelle um 90° verdreht ist, während die zweite Exzenterwelle nicht verdreht wurde. In diesem Fall führt die Exzentrizität der ersten Exzenterwelle E1 zu einer Auslenkung aus der Zeichenebene heraus, und die Exzentritzität der zweiten Exzenterwelle E2 zu einer Auslenkung nach rechts. Im Ergebnis ergibt sich eine Auslenkung, die der vektoriellen Überlagerung der beiden genannten Teilauslenkungen entspricht.
Fig. 2 d zeigt die Stellung, bei der beide Exzenterwellen E1, E2 jeweils um 180° aus der Ausgangsstellung nach Fig. 2 a herausgedreht sind. Die Wirkung der Exzentrizitäten der beiden Exzenterwellen sind gerade entgegengerichtet, so daß sich im Ergebnis keine Auslenkung des mit dem Spiegel starr verbundenen Flanschs 4 ergibt.

## Patentansprüche

1. Vorrichtung zur Positionierung eines Gegenstands (14) relativ zu einer Struktur (2), gekennzeichnet durch:
- eine erste, von einem ersten Antrieb (AN1) angetriebene Exzenterwelle (E1), wobei der erste Antrieb (AN1) relativ zur Struktur (2) starr angeordnet ist,
- eine zweite, von einem zweiten Antrieb (AN2) angetriebene Exzenterwelle (E2), wobei der zweite Antrieb (AN2) relativ zu dem zu positionierenden Gegenstand (14) starr angeordnet ist, wobei
- die erste Exzenterwelle (E1) mit der zweiten Exzenterwelle (E2) drehbar verbunden ist und die Drehachse (A3) für die Drehbewegung zwischen erster (E1) und zweiter Exzenterwelle (E2) außerhalb der beiden Drehachsen (A1, A2) für den Antrieb der ersten und zweiten Exzenterwelle (E1, E2) liegt,
- eine Verdrehsicherung, die eine Verdrehung zwischen Struktur (2) und dem zu positionierendem Gegenstand (14) verhindert.

2. Vorrichtung nach Anspruch 1, dadurch gekennzeichnet, daß die Verdrehsicherung als Faltenbalg (18) ausgebildet ist.

3. Vorrichtung nach einem der vorangehenden Ansprüche, dadurch gekennzeichnet, daß der zu positionierende Gegenstand der Spiegel (14) eines Teleskops oder die Antenne einer Telekommunikationsvorrichtung ist.
